# EUROPEAN PATENT APPLICATION

(11) **EP 2 537 814 A1**
(43) Date of publication of application: **26.12.2012**
(21) Application number: 12732068.7
(22) Date of filing: 03.01.2012
(51) Int. Cl.: C02F 11/00, C10J 3/00, C10J 3/48, C02F 101/30

(54) **PYROLYSIS PLANT FOR PROCESSING CARBONACEOUS FEEDSTOCK**

(30) Priority: 04.01.2011 UA 2011000050
(71) Applicant: Dawnfar Investments Limited, 1025 Nicosia (CY); Yiayia Services Limited, 1060 Nicosia (CY)
(72) Inventor: KHEIFETS, Viktor Georgiiovych, Dnipropetrovsk 49029 (UA); ZLOCHEVSKYI, Mykola Vladyslavovych, Kiev 01034 (UA)
(74) Representative: Flügel Preissner Kastel Schober
(86) International application number: PCT/UA2012/000001
(87) International publication number: WO 2012/093982

(57) **Abstract**

The invention relates to electrocatalytic pyrolysis plants for processing carbonaceous feedstock by pyrolysis and producing pyrolysis synthesis gas and the solid carbon residue pyrocarbon. The plant comprises a reactor (1) in the form of a horizontal cylindrical body (2) with a heat insulating layer (3) and a shell (4), electric heaters (5) situated around the periphery of the body (2) of the reactor (1), a hopper (6) for feedstock, a feed chamber (7) situated in the upper inlet section of the reactor (1) and provided with a charging device (8), a pyrocarbon discharge chamber (9) situated in the lower outlet section of the reactor (1), and a pyrolysis synthesis gas outlet pipe (10) situated in the upper section of the reactor chamber. The reactor is stationary. An agitator (12) is mounted horizontally in the reactor (1), said agitator being in the form of a shaft (13) with inclined blades (14), arranged thereon in a spiral fashion, and being provided with a drive (15). The electric heaters (5) are in the form of a stator winding comprising three electric heater sections, which are situated outside the body of the reactor (1) with an angle of 120° there between and which can be connected to a 3-phase or 2-phase AC electric circuit. A catalyst (11) is applied to the inclined blades of the agitator (12) and to the inside surface of the body (2) of the reactor (1). The catalyst (11) is in the form of a sprayed metallic composition comprising a powdered mixture of metals including nickel (Ni), cadmium (Cd) and molybdenum (Mo).

## Description

### FIELD OF THE INVENTION

The present invention relates to electrocatalytic pyrolysis plants for processing carbonaceous feedstock, mainly sediment of sewage waters, by pyrolysis and producing pyrolysis synthesis gas pyrocarbon as a solid carbon residue.

### BACKGROUND OF THE INVENTION

It is known that in the process of microbiological reclaiming of sewer drains the product of life activity of microorganisms is formed. This product is called biological silt.

Currently biological silt is transported to silt sites and then stored on the landfills in storage pits, where deworming takes place during not less than three-year seasoning.

As the result of this, biological silt is accumulated on the sites and landfills in large amount that causes certain problems concerning its storage, in particular a spontaneous ignition problem.

The seasoned biological silt can be used as a fertilizer for growing commercial crops. That is why there is an important task to utilize wastes got from reclaiming sewer drains system via gasification, i.e. recycling them in combustible synthesis gas, which can be used as a fuel for generating thermal and electric energy.

The gasification of biological silt is completely solved by pyrolysis plants.

A pyrolysis plant allows to reduce costs for processing biological silt considerably or completely reimburse them at the expense of recovering, producing and commercialization alternative energy carriers (gas, solid fuel, liquid fuel, steam, hot water, electric power).

The pyrolysis plants, wherein an average temperature catalytic pyrolysis is occurred, are considered to be the most advanced.

Pyrolysis is referred to as a process of thermal decomposition of carbonaceous feedstock, for example, biological silt (CxHyOz), without the participation of oxygen, the result of which is producing the combustible gas (a mix of CO, H2, CH4, C2H6 etc.), liquid products and a solid carbon residue: CxHyOz t→CO, H2, CO2, CnHm, C.

This process is characterized by the course of reactions of interaction and compaction of residual fragments and initial molecules, resulting in splitting organic mass, recombination of the split products to thermal dynamic stable substances of a solid carbonaceous residue (technical carbon) and a synthesis gas.

In the course of this process not only thermal disintegration of a material occurs, but synthesis of new products too.

These phases are interconnected and take place simultaneously with the only distinction that each of them prevails in a certain interval of temperature or a period of time.

Organic substances of waste, including those containing chlorine, as a result of pyrolysis, are transformed to a mixture of less harmful compounds, so-called synthesis gas.

During heating large molecules such as cellulose, semicellulose and lignin are split to average molecules and carbon (charcoal).

The quantity and quality of the pyrolysis products are determined by waste composition, their moisture content and the temperature of the process.

The most effective pyrolysis is an average-temperature pyrolysis or average-temperature coking (500 -1000°C), during which the discharge of gas increases and the discharge of liquid products and the coke remainder decreases.

The process is the most advanced due to the high temperature of the reaction and availability of two kinds of the reaction accelerators - catalysts (a mechanic catalyst and several chemical ones).

Moreover, when the temperature exceeds 600°C, decomposition of any dangerous waste occurs with the speed of reaction, the percentage of volatile components discharge increasing and the volume of slag decreasing.

With this method the volume ratio between solid and gaseous components of the end product changes that gives the chance to avoid complex technologies of the further processing of coal residue and to use combustible gas directly (after reclaiming).

Use of pyrolysis plants for biological silt treatment allows not only to utilize it, but to obtain valuable hydrocarbons of oil number. Consequently, expenses on the producing combustible gas are considerably reduced.

Processing of biological silt occurs in a pyrolysis plant due to catalytic pyrolysis as the result of which synthesis gas and a solid carbon residue (charcoal) are formed.

Further, the synthesis gas obtained is used as a fuel for thermal energy generation without its further processing.

The solid carbon residue is used either as a technological product through its activation with the recovery of the activated coal on an outlet of the pyrolysis chamber or as an energetic product through its direct burning or its further gasification.

Conventional pyrolysis plants (further referred to as pyrolysis plant or plant) used for thermal processing of mainly solid household and industrial wastes with the purpose of their recycling and recovery of pyrolysis synthesis gas and pyrocarbon as a solid carbon residue, are known to comprise the reactor vessel made in the form of a drum rotating on supports, and thermal processing of carbonaceous feedstock is carried out by the products of fuel combustion fed from an external source to the combustion chamber, disclosed in 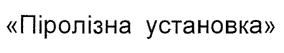 UA 13082 (U) F23G 5/00, C10B 53/00, 15.03.2006 [1]; 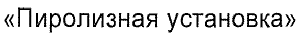 RU 2381254 (C2) (RU) C10B53/02, 10.02.2010 [2].

The main disadvantages of the conventional pyrolysis plants [1, 2] are the following:
- the rotation of a drum demands considerable power consumption, and efficiency of agitation of the feedstock in the drum-type reactor is very low that degrades the pyrolysis process in the reactor. Therefore, the carbon contained in the feedstock is transformed from a solid modular state in gaseous state in a small amount that substantially reduces the yield of the extracted pyrolysis synthesis gas to be used further;
- the thermal processing of the carbonaceous feedstock is produced by the products of fuel combustion fed from an external source to the combustion chamber that demands large thermal energy consumption and fuel consumption.

State of the art pyrolysis plants for thermal processing of mainly solid household and industrial wastes with the purpose of its recycling and producing pyrolysis synthesis gas and pyrocarbon - a solid carbon residue, are known to comprise the reactor which is installed non-rotatably and supplied with an actuator auger, and thermal processing of carbonaceous feedstock is carried out by the products of combustion of the fuel fed from an external source to the combustion chamber, disclosed in 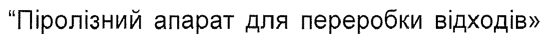 UA 1484 (U) F23G 5/027, F23G 7/00, F23G 7/12; 15.11.2002 [3]; 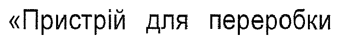 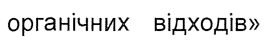 UA 42377 (U) C10B47/00, C10B53/00, C10G1/00, C1JG5/00), 25.06.2009 [4].

Owing to that the reactor in the state of the art pyrolysis plants [3, 4] is installed non-rotatably and supplied with the actuator auger, the process of agitating carbonaceous feedstock in the course of pyrolysis process is slightly intensified. However, thermal processing of carbonaceous feedstock in both [1, 2] is carried out by the products of fuel combustion, where the fuel is fed from an external source to the combustion chamber that demands large consumption of thermal energy and fuel.

The known pyrolysis plants that have found the wider application are intended for thermal processing of mainly solid household and industrial waste for the purpose of their utilizing and producing pyrolysis synthesis gas and pyrocarbon - a solid carbon residue, wherein the reactor is stationary and supplied with a drive agitator with blades, and thermal processing of carbonaceous feedstock is carried out by the products of fuel combustion, where the fuel is fed from an external source to the combustion chamber, disclosed in "Improvements in or relating to a pyrolysis reaction and apparatus" GB 2144836 (A) C10B47/44; C10853/00; 13.03.1985 [5]; "Apparatus for the pyrolysis of waste products" US 4062304 (A) B29B17/00; C10B47/48; C10853/00; C10B7/10; F23G5/027;B29B7/00; C10B47/00; C10B7/00; 13/12/1977 [6]; "Process and apparatus for carbonizing a comminuted solid carbonizable material" US 4123332 (A) (ENERGY RECOVERY RESEARCH GROUP, INC) C10B47/44; C10B49/04; C10B53/00; C10B53/02; C10B53/07; C10B7/10; C10J3/00; C10B47/00; C10B49/00; C10B53/00; C10B53/07; C10B7/00; C10J3/00; 31.10.1978 [7]; "Apparatus for the pyrolysis of comminuted solid carbonizable materials" US 4308103 (A) C10B47/44; C10853/00; C10B53/07; C10B7/10; C10847/00; C10B53/00; C10B53/07; C10B7/00; 29.12.1981 [8]; "Process for pyrolyzing tire shreds and tire pyrolysis systems" US 6736940 (B2) C10847/44; C10B53/07; C10B7110; C10G1/10; C10B47/00; C10B7/00; C10G1/00; 18.05.2004 [9]; "Apparatus and method for treating organic waste and organic material obtained by the processing method" US 2010092652 (A1) A23L1/212; A23L1/31; B09B3/00; C05F9/00; C10B49/04; C10853/00; F26B11/16; F26B5/04; F26B9/06; A23L1/212; A23L1/31; B09B3/00; C05F9/00; C10B49/00; C10B53/00; F26B11/00; F26B5/04; F26B9/06; 15.04.2010 [10].

However, in these pyrolysis plants [5 -10] the thermal processing of carbonaceous feedstock is carried out by the products of fuel combustion, where the fuel is fed from an external source to the combustion chamber that demands the large consumption of thermal energy and fuel.

The most progressive and well known pyrolysis plants that have found their application recently are intended for thermal processing of mainly solid household and industrial waste for the purpose of their recycling and producing pyrolysis synthesis gas and pyrocarbon - a solid carbon residue, wherein the reactor is stationary and supplied with a drive agitator with blades, and thermal processing of carbonaceous feedstock is carried out by means of the electric heaters arranged around the periphery of the body that reduces power consumption, improves pyrolysis process in the reactor. Therefore, the carbon contained in feedstock is transformed from solid modular state to gaseous state in large amount that raises a little the discharge of being recovered pyrolysis synthesis gas to be used further, disclosed in "Metal and non-metal pyrogenation separation method on waste printed plate board" CN 101386015 (A) B09B3/00; 18.03.2009 [11];"Thermal decomposition processing device of disposed printed plate board" CN 201279520 (Y) B09B3/00; 29.07.2009 [12].

However, the known pyrolysis plants [11, 12] have no means for instant loading of carbonaceous feedstock and continuous unloading of pyrocarbon - solid carbon residue. Consequently, they can't work in the continuous mode.

Therefore, both loading of carbonaceous feedstock and unloading of pyrocarbon - a solid carbon residue, are performed periodically while opening or closing face door at the beginning or in the end of pyrolysis process in the reactor.

This breaks the established pyrolysis mode in the reactor and reduces dramatically productivity that limits the use of such plants.

The known and the closest by the quantity of the common characteristics and the results achieved pyrolysis electric catalytic plant of continuous action for processing carbonaceous feedstock and producing pyrolysis synthesis gas and pyrocarbon - a solid carbon residue comprises a reactor in the form of cylindrical body installed horizontally with a heat insulating layer, and a shell, the electric heaters situated around the periphery of the reactor body, a hopper for feedstock, a feed chamber situated in the upper inlet section of the reactor and provided with a charging device, a pyrocarbon discharge chamber situated in the lower outlet section of the reactor opposite to its inlet section, a pyrolysis synthesis gas outlet pipe situated in the upper section of the reactor, and a catalyst applied to the details inside the reactor chamber, disclosed in 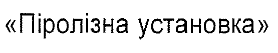 UA 12177 (U) F23G 5/00, C10B 53/00, 1/16/2006, the closest analog - a prototype] [13].

Electric heaters are arranged on the periphery of the reactor body and inside it.

The reactor is installed on the supports providing rotation round a longitudinal axis.

The charging device is executed in the form of an auger.

Unloading of pyrocarbon from the pyrocarbon discharge chamber is performed by gravitational method as the pyrocarbon discharge chamber isn't equipped with mechanic means of unloading.

The catalyst is applied to the bodies of electric heaters.

Disadvantages of the described pyrolysis plant are the following shortcomings in its design.

Electric heaters are arranged inside the reactor body that limits its interior space.

Due to the reactor being installed on the supports providing rotation round a longitudinal axis, the reactor rotation demands large power consumption, and efficiency of agitating the feedstock in the reactor of such drum-type is very low that degrades the pyrolysis process in the reactor.

Due to the catalyst being applied to the bodies of the electric heaters, action of the catalyst is limited to the small area of its contact with carbonaceous feedstock that doesn't allow to use the catalyst effectively to improve pyrolysis process inside the body of the reactor.

Due to the feed chamber being made in the form of an auger, considerable efforts are required to transport feedstock from the hopper inside the body of the reactor while its operation that demands high power of drives and considerable power consumption.

Due to the pyrocarbon discharge chamber provides gravitational discharging and isn't equipped with any mechanic discharging means, jams in it are common that make discharging process difficult, breaks a normal course of pyrolysis process in the reactor and reduces productivity of pyrolysis plant further.

All the mentioned above disadvantages and shortcomings of the conventional pyrolysis plant design don't allow to provide intensive agitating process and thermal decomposition of feedstock in the reactor, slow down pyrolysis process. Therefore, the carbon contained in the feedstock changes its state from a solid modular to gaseous state in a small amount.

The mentioned above factors substantially influence the increase of power consumption by pyrolysis process in the reactor that prevents the high yield of pyrolysis synthesis gas.

### SUMMARY OF THE INVENTION

The object of the present invention is to intensify agitating and thermal decomposition of feedstock in the reactor to provide larger amount of the gaseous carbon recovered from solid feedstock.

The present invention improves pyrolysis electric catalytic plant for processing carbonaceous feedstock and producing pyrolysis synthesis gas and the solid carbon residue pyrocarbon by suggesting effective agitating, charging and discharging devices as components of the plant and effective configuration of electric heaters and the active catalyst applied to rotating elements inside the reactor of the plant.

The technical result achieved is the decrease of power consumption and increase of the yield of pyrolysis synthesis gas.

The mentioned above objects are solved and the technical result is achieved by that in electrocatalytic pyrolysis plant for processing carbonaceous feedstock and producing pyrolysis synthesis gas and the solid carbon residue - pyrocarbon, comprising a reactor in the form of a horizontal cylindrical body with a heat insulating layer and a shell, electric heaters situated around the periphery of the body of the reactor, a hopper for feedstock, a feed chamber situated in the upper inlet section of the reactor and provided with a charging device, a pyrocarbon discharge chamber situated in the lower outlet section of the reactor opposite to its inlet part, a pyrolysis synthesis gas outlet pipe situated in the upper section of the reactor chamber, and a catalyst applied to the details inside the reactor chamber, according to the present invention, the reactor is stationary, the agitator with the possibility of rotation is mounted horizontally in the body of the reactor, said agitator being in the form of a shaft with inclined blades arranged thereon in a spiral fashion and being provided with a drive situated outside the reactor and kinematically connected with the shaft of the agitator, the feed chamber with the horizontal inlet channel arranged across an axis of the reactor, inside of which the charging device is situated, the pyrocarbon discharge chamber in the lower section is with horizontal outlet channel arranged across the axis of the reactor, inside of which the discharging device (18) is arranged, the electric heaters are in the form of a stator winding comprising three electric heater sections, which are situated outside the body of the reactor with an angle α = 120° therebetween and which can be connected to a 3-phase or 2- phase AC electric circuit, and the catalyst is applied to the inclined blades of the agitator and to the inside surface of the body of the reactor, being in contact to the feedstock while its agitating by the inclined blades of the shaft of the agitator, and the catalyst is in the form of a sprayed metallic composition comprising a powdered mixture of metals including nickel (Ni), cadmium (Cd) and molybdenum (Mo).

Due to introduction of the effective drive agitator of a shovel type with the inclined blades arranged thereon in a spiral fashion, the charging device and the pyrocarbon discharge chamber to the structure of the electrocatalytic pyrolysis plant for processing carbonaceous feedstock and producing pyrolysis synthesis gas and the solid carbon residue pyrocarbon, and also because of the use of effective configuration of the electric heaters made in the form of a winding stator as well as due to extension of the area of applying and use of more effective catalyst, the intensification of the processes of agitating and thermal decomposition of feedstock in the reactor is provided that accelerates the pyrolysis process and increases the quantity of carbon transforming from a solid modular state to the gaseous one.

It was proved experimentally that during its operation the suggested pyrolysis plant provides reduction of power consumption and increases the yield of pyrolysis synthesis gas if compared with the known plant [13].

The present invention has also some additional substantial differences, which specify and develop the mentioned above main differences and create an additional positive technical result.

As a catalyst the sprayed metallic composition containing a powdered mixture of metals, including nickel (Ni) - 55-65 %, preferably 60 %, cadmium (Cd) - 15 -25 %, preferably 20 %, and molybdenum (Mo) - the rest is used.

The disclosed composition has been specified by means of experiments and is considered to be optimal for the suggested catalyst as when it contacts with the feedstock the process of feedstock decomposition in the reactor is intensified that accelerates pyrolysis process.

The charging device can be made in the form of a piston mechanism provided with the crank-rocker drive (alternative embodiment 1).

The charging device can also be executed in the form of an auger mechanism provided with the electric drive (alternative embodiment 2).

When choosing the type of the charging device, alternative embodiment 1 is exploited for larger fractions of the feedstock, and alternative embodiment 2 is exploited for finer fractions of the feedstock.

The pyrocarbon discharge chamber can be executed in the form of a piston mechanism provided with the crank-rocker drive (alternative embodiment 3).

The pyrocarbon discharge chamber can be executed in the form of an auger mechanism provided with the electric drive (alternative embodiment 4).

When choosing the type of the pyrocarbon discharge chamber alternative embodiment 3 is exploited for larger fraction of pyrocarbon as a solid carbon residue, and alternative embodiment 4 is exploited for finer fraction of pyrocarbon - a solid carbon residue.

The drive of the agitator is in the form of a motor-reducer drive, which is kinematically connected to the shaft of the agitator by means of a muff.

Such arrangement provides compactability and an optimum torsion torque in order to achieve intensive agitating of feedstock and conveying it from the feed chamber to the pyrocarbon discharge chamber by the inclined agitator blades situated on the agitator shaft in a spiral fashion that contributes to acceleration of the process of pyrolysis.

The catalyst can be applied to the lower section of the inside surface of the reactor body up to the segment height h equal to 0.5 - 0.50 of its diameter D.

It is proved by the experiments that applying the catalyst to the lower section of the inside surface of the reactor body up to segment height h equal to 0.25 - 0.50 of its diameter D, optimizes the catalyst consumption and provides its maximum effect on the feedstock in a contact zone. The choice of the zone of the catalyst applying to an inside wall beyond the specified limits either slows down the pyrolysis process (at h <0.25 D) or increases unreasonably the catalyst consumption without substantial acceleration of the pyrolysis process (at h> 0.50 D).

Further the present invention is described and illustrated by drawings. The detailed description of an example of its embodiment will be made referring to the accompanying drawings.

### DESCRIPTION OF THE DRAWINGS

Having thus described the invention in general terms, reference will now be made to the accompanying drawings, wherein:
Fig.1 shows general view and longitudinal section of the electrocatalytic pyrolysis plant for processing carbonaceous feedstock and producing pyrolysis synthesis gas and the solid carbon residue as pyrocarbon:
Fig. 2 shows section A-A;
Fig. 3 illustrates 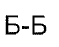 (alternative embodiment 1);
Fig. 4 illustrates profile 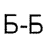 (alternative embodiment 2);
Fig. 5 illustrates profile B-B (alternative embodiment 3);
Fig. 6 illustrates profile B-B (alternative embodiment 4).

### DESCRIPTION OF PREFERRED EMBODIMENT

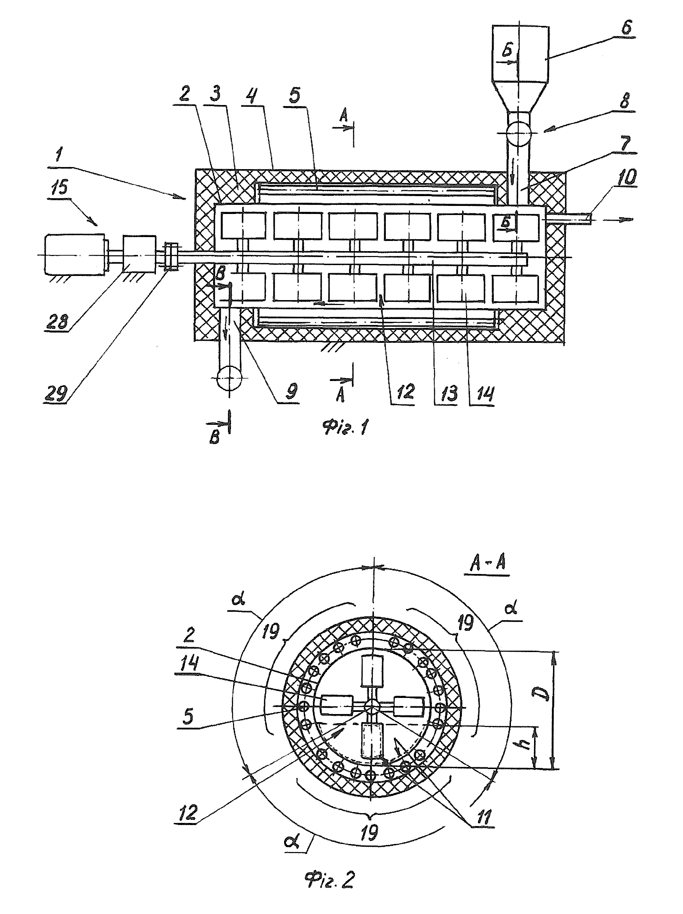

The electrocatalytic pyrolysis plant for processing carbonaceous feedstock and producing pyrolysis synthesis gas and the solid carbon residue - pyrocarbon (Fig. 1 - 6) comprises a reactor 1 in the form of a horizontal cylindrical body 2 with a heat insulating layer 3 and a shell 4, wherein electric heaters 5 situated around the periphery of the body 2 of the reactor 1, a hopper 6 for feedstock, a feed chamber 7 situated in the upper inlet section of the reactor 1 provided with a charging device 8, a pyrocarbon discharge chamber 9 situated in the lower outlet section of the reactor 1 opposite to its inlet part, a pyrolysis synthesis gas outlet pipe 10 situated in the upper section inside the reactor 1, and a catalyst 11 (Fig. 2) applied to the details inside surface of the reactor 1.

The main characteristics of the plant as the main improvements of its design are given below.

The reactor 1 is installed non-rotatably (Fig. 1).

The agitator 12 with possibility of rotation is mounted horizontally inside the body 2 of the reactor 1. Said agitator, being in the form of a shaft 13 with inclined blades 14 arranged thereon 13 in a spiral fashion and being provided with a drive 15 situated outside of the reactor 1 and kinematically connected with the shaft 13 of the agitator 12.

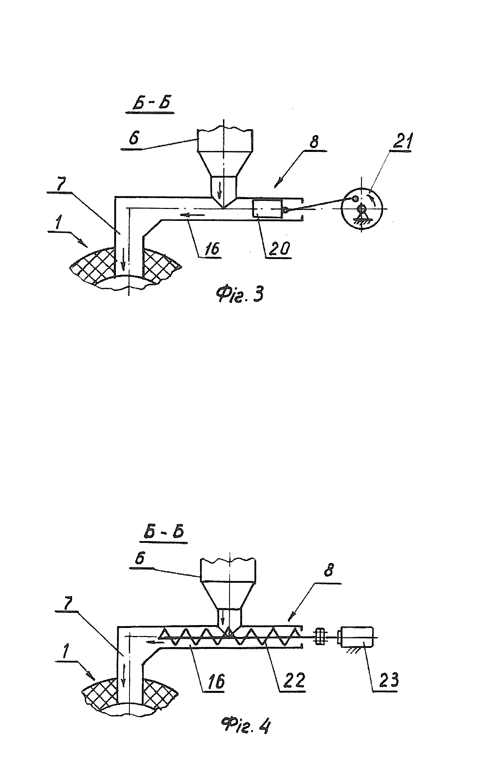

The feed chamber 7 (Fig. 3, 4) is provided with the horizontal inlet channel 16 arranged across the axis of the reactor 1, inside which 16 the charging device 8 is situated.

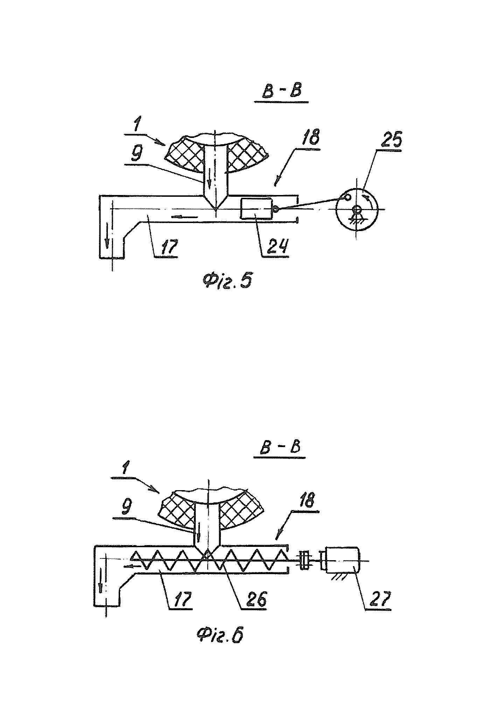

A pyrocarbon discharge chamber 9 (Fig 5, 6) in the lower section is with the horizontal outlet channel 17 arranged across the axis of the reactor 1, inside of which 17 the discharging device 18 is situated.

The electric heaters 5 (Fig. 2) are in the form of a stator winding comprising three electric heater sections 19 of the electric heaters 5 which are situated outside the body 2 of the reactor 1 with an angle α = 120° therebetween and which can be connected to 3-phase or 2- phase AC electric circuits.

The catalyst 11 (Fig. 2) is applied to the inclined blades 14 of the agitator 12 and to the inside surface of the body 2 of the reactor 1. The inside surface is in contact to the feedstock when agitating by the inclined blades 14 of the shaft 13 of the agitator 12. The sprayed metallic composition comprising a powdered mixture of metals, including nickel (Ni), cadmium (Cd) and molybdenum (Mo), is used as a catalyst 11.

The main feature of the plant is the additional improvements of its design described below.

It is reasonable to use the sprayed metallic composition containing a powdered mixture of metals, including nickel (Ni) - 55-65%, preferably 60%, cadmium (Cd) - 15 - 25%, preferably 20%, and molybdenum (Mo) - the rest, as a catalyst 11 (Fig. 2).

The charging device 8 can be executed in the form of the piston mechanism 20 (Fig. 3) provided with a crank-rocker drive 21 (alternative embodiment 1).

The charging device 8 also can be executed in the form of an auger mechanism 22 (Fig. 4) provided with an electric drive 23 (alternative embodiment 2).

When choosing a type of the charging device 8 alternative embodiment 1 (Fig. 3) is exploited for larger fractions of the feedstock and alternative embodiment 2 (Fig. 4) is exploited for finer fraction of the feedstock.

The discharging device 18 can be executed in the form of a piston mechanism 24 (Fig. 5) provided with a crank-rocker drive 25 (alternative embodiment 3).

The discharging device 18 can also be executed in the form of an auger mechanism 26 (Fig. 6) provided with an electric drive 27 (alternative embodiment 4).

When choosing a type of the discharging device 18 alternative embodiment 3 (Fig. 5) is exploited for larger fraction of a solid carbon residue - pyrocarbon, and alternative embodiment 4 (Fig. 6) is exploited for finer fraction of a solid carbon residue - pyrocarbon.

The drive 15 of the agitator 12 is in the form of a motor-reducer 28 (Fig. 1) which is kinematically connected to the shaft 13 of the agitator 12 by means of the muff 29.

Such arrangement provides compactness and an optimum torque in order to provide intensive agitating of the feedstock by the agitator blades that accelerates the pyrolysis process.

The catalyst 11 can be applied to the lower section of the inside surface of the body 2 of the reactor 1 on segment height h (Fig. 2) equal to 0.25 - 0.50 of its diameter D.

In order to improve discharging the reactor 1 can be arranged with an inclination of its longitudinal axis downwards towards discharging at an angle 3-10° to a horizon.

The electrocatalytic pyrolysis plant for processing carbonaceous feedstock and producing pyrolysis synthesis gas and the solid carbon residue - pyrocarbon works as follows.

To illustrate the example of the specific execution and its effect biological silt was used as a feedstock.

Three kinds of waste are formed in the process of sewage water treatment and sewage purification: waste got from screens, sand sludge and biological silt.

After 3-year dehydration of the sand on sand platforms and dehydration of biological silt and raw sludge on sludge platforms (from 98-99% to 60%) waste is transported to the storage area.

The (averaged) results of physical and mechanical testing of biological silt samples taken from the storage area have shown that externally biological silt represents fine-grained substance of brown colour with the inclusions of the typical food residues in the form of stones of fruit trees, shell and seed coats, fibrous vegetative residues, among which broken glass, pieces of metals and ceramics etc. are encountered.

As a whole, biological silt is very similar to high moor peat, but its granulometric texture is characterized by the larger amount of small and dust-like particles (see Table 1).

**Table 1**

| Product name | Density, t/m³ | Bulk density, kg/m³ | Granulometric texture, mm | | | | | |
|---|---|---|---|---|---|---|---|---|
| | | | grade/ class content, % | | | | | |
| | | | >50 | 50-0.1 | 0,1-0.05 | 0,05-0.01 | 0,01-0.005 | <0,005 |
| Biological silt | 2.23 | 0.76 | 0.35 | 13.01 | 25.72 | 38.78 | 9.59 | 12.55 |

The analysis of the chemical composition of the biological silt made for estimating its combustibility is given in Table 2 that proves its identity with high moor peat with the slight distinctions in the ash and moisture content.

**Table 2**

| | Fuel composition, % (mass) | | | | | | | Q |
|---|---|---|---|---|---|---|---|---|
| Fuel name | Cp | Hp | Op | Sp | Np | Wp | Ap | |
| | Carbon | Hydrogen | Oxygen | Sulfur | Nitrogen | Ash content | Mosture content | Calorific capacity KJ/kg Kcal/kg |
| Lumps of air-dry peat | 36.3 | 3.6 | 20.3 | 0.2 | 1.6 | 30.0 | 8.0 | 17500 4170 |
| Biological silt prepared for gasification | 35.1 | 4.56 | 7.1 | 0.83 | 1.83 | 20.0 | 30.0 | 17200 411 |
| Ratio to mass content in peat | 98.93 | 126.67 | 37.98 | 415.00 | 114.38 | 66.67 | 375.00 | 98.56 |

Considering this property, it is reasonable to gasify biological silt with the purpose of recovery a generator gas and a mineral residue in the form of ashes or the liquated slag.

Moreover, in the process of thermochemical reaction of the gasification, each kilogram (kg) of carbon from the composition of the biological silt can provide dissociation in the molecules of hydrogen and oxygen of about 0.4 kg of water. This will allow, in its turn, to recycle a part of the polluted sewage waters.

Preparatory damp feedstock (biological silt) of small fraction (5 -25 mm) is handled to a vibration screen in order to screen out large particles, i.e. those of the size more than 25 mm. The screened fine fraction is fed to the screen of a drying camera.

Natural gas serves as an energy carrier for the drying camera, when the plant starts up. As soon as a synthesis gas is being recovered, the drying camera is switched on and works on the synthesis gas generated by the plant itself.

Moisture content of feedstock on the exit from the drying camera should be less 15%.

Having been dried, the feedstock is handled to the pyrolysis plant, which is previously heated up to 600 - 800°C by connecting sections 19 of the electric heaters 5 to 3-phase or 2- phase AC electric mains, and then the drive 15 of the agitator 12 is turned on.

The feedstock is charged into the hopper 6. The feedstock from the hopper 6 comes to the feed chamber 7, wherefrom it is fed at temperature 600-800°C to the body 2 of the reactor 1 through the horizontal inlet channel 16 by means of the charging device 8 (Fig. 1) made in the form of a piston mechanism 20 with the crank-rocker drive 21 (Fig. 3) or an auger mechanism 22 with the electric drive 23 (Fig. 4).

The feedstock charged into the reactor 1 comes to the inclined blades 14, rotating on the shaft 13 of the agitator 12, through the helical spiral and the inside surface of the body 2 of the reactor 1. The inside surface of the body 2 of the reactor 1 is in contact with the feedstock. The catalyst 11: the sprayed metallic composition comprising a powdered mixture of metals, including nickel (Ni) - 55-65%, preferably 60%, cadmium (Cd) - 15-25%, preferably 20%, and molybdenum (Mo) - the rest (Fig. 2), is applied to the inclined blades 14.

Inside the body 2 of the reactor 1 the intensive mechanic agitating of the feedstock is occurred by the inclined blades 14 arranged on the shaft 13 of the agitator 12 in a spiral fashion.

As a result of intensive agitating by the inclined blades 14 of the agitator 12, and thermal influence of the sections 19 of the electric heaters 5, which provide heating to the temperature 600-800°C, and the catalyst action, there is the instant heat shock providing thermal decompounding of the feedstock, i.e. the biological silt, in two ingredients: the gaseous product and the solid carbon as a product.

The feedstock, subsequently later pyrocarbon - the solid carbon residue, is transported from the charging zone to the discharging zone, i.e. to the pyrocarbon discharge chamber 9, by means of the inclined blades 14 arranged on the shaft 13 of the agitator 12 in a spiral fashion. To improve discharging process the reactor 1 can be installed with an inclination of its longitudinal axis downwards towards discharging at an angle 3-10° to the horizon.

When accumulated, the solid carbon residue - pyrocarbon is unloaded from the pyrocarbon discharge chamber 9 through the horizontal outlet channel 17 by means of the discharging device 18 (Fig. 1), which is in the form of a piston mechanism 24 with the crank-rocker drive 25 (Fig. 5), or an auger mechanism 26 with the electric drive 27 (Fig. 6) at the temperature in the receiver about 400°C.

Heating of the zone of gasification in the body 2 of the reactor 1 is provided by means of the external heating of the body 2 of the reactor 1 with the electric heaters 5 executed in the form of a stator winding, which includes three sections 19 of the electric heaters 5 arranged outside of the body 2 of the reactor 1 at an angle α = 120° therebetween with the possibility to be connected to 3-phase or 2-phase AC electric circuits.

After complete initial heating and the beginning of the reaction heating of the gasification zone in the body 2 of the reactor 1 is performed partially due to the heat evolved in the course of the reaction.

The feedstock for gasification in the reactor 1 is fed continuously by means of the charging device 8 (Fig. 1) made in the form of a piston mechanism 20 with the crank-rocker drive 21 (Fig. 3) or an auger mechanism 22 with the electric drive 23 (Fig. 4) that provides both charging the feedstock inside the body 2 of the reactor 1 at temperature 600-800°C and creating the feedstock seal which prevents the synthesis gas emission through the feed chamber 7.

The discharge of the solid carbon residue - pyrocarbon is performed as far as it is accumulated on the horizontal outlet channel 17 by means of the discharging device 18 (Fig. 1) made in the form of a piston mechanism 24 with the crank-rocker drive 25 (Fig. 5) or the auger mechanism 26 with the electric drive 27 (Fig. 6) at temperature about 400°C that provides both the feedstock discharging into the receiver and creating the pyrocarbon seal which prevents the synthesis gas emission through the pyrocarbon discharge chamber 9.

The compulsory condition for the outlet of hot solid carbon residue - pyrocarbon is its emission without contact with the air. Otherwise, it will be instantly oxidized and will loose its commercial properties.

With the purpose to decrease the dust content of the synthesis gas formed in the course of pyrolysis at temperature about 400°C and under the pressure 0.05 - 0.10 kg/sm², the synthesis gas is removed in counter part of the pyrocarbon (the solid carbon residue - pyrocarbon) discharge chamber 9, wherefrom it gets in a damper precipitating reservoir (not shown on drawings) through the pyrolysis synthesis gas outlet pipe 10. Then it comes to the pyrolysis synthesis gas clearing block (not shown on drawings) for purification of the gas mix. After its purification commodity synthesis gas at clearing stage has the physical characteristics given in Table 3.

**Table 3**

| | | | |
|---|---|---|---|
| | | | |

| Characteristics | | Indicators | |
|---|---|---|---|
| | Units of measure | synthesis - gas after the reactor | Commodity synthesis - gas (after the compressor) |
| Temperature | °C | 400 | 70 |
| Dust content | mg/kg | 500 | 2 |
| Pressure | Atm (kg/sm²) | 0.05-0.1 | 5 |
| Heating | kkal/m³ | 3400-4100 | 3300-4000 |

The compositional analysis of the pyrolysis synthesis gas depending on its morphological composition, terms and conditions of biological silt storage is given in Table 4.

**Table 4**

| Name of component | Concentration, % (volume) |
|---|---|
| Hydrogen (H₂) | 6.92 |
| Oxygen (O₂) | 2.83 |
| Nitrogen (N₂) | 28.73 |
| Carbonic oxide (CO) | 14.96 |
| Methane (CH₄) | 8.91 |
| Carbonic gas (CO₂) | 24.40 |
| Ethylene (C₂H₄) | 4.42 |
| Ethane (C₂H₆) | 2.70 |
| Propylene (C₃H₆) | 1.91 |
| Isobutane (i-C₄H₁₀) | 0.52 |
| H- butane (H-C₄H₁₀) | 0.75 |
| Ethanol (C₂H₅OH) | 0.78 |
| Water (H₂O) | 1.65 |
| **Total** | **100** |

The basic components of the solid carbon residue pyrocarbon are carbon - 78%, ashes - 21.62%. The other components contained in the solid carbon residue pyrocarbon are given in Table 5.

**Table 5.**

| Component | Content | |
|---|---|---|
| | %* 10⁻³ | mg/kg |
| Phosphorus (P) | 70 | 700 |
| Lead (Pb) | 2 | 20 |
| Copper (Cu) | 3 | 30 |
| Titanium (Ti) | 150 | 1500 |
| Vanadium (V) | 7 | 70 |
| Manganese (Mn) | 50 | 500 |
| Gallium (Ga) | 1.5 | 15 |
| Tungsten (W) | 0,3 | 3 |
| Nickel (Ni) | 5 | 50 |
| Chrome (Cr) | 7 | 70 |
| Germanium (Ge) | 0.3 | 3 |
| Cobalt (Co) | 1 | 10 |
| Bismuth (Bi) | 0.2 | 2 |
| Barium (Ba) | 30 | 300 |
| Beryllium (Be) | 0.2 | 2 |
| Niobium (Nb) | 0.7 | 7 |
| Molybdenum (Mo) | 0.3 | 3 |
| Tin (Sn) | 0.5 | 5 |
| Lithium (Li) | 10 | 100 |
| Zirconium (Zr) | 7 | 70 |
| Silver (Ag) | 0.000001 | 0.1 |
| Lanthanum (La) | 1 | 10 |
| Zinc (Zn) | 10 | 100 |
| Scandium (Sc) | 0.5 | 5 |
| Strontium (Sr) | 20 | 200 |
| Yttrium (Y) | 1.5 | 15 |
| Ytterbium (Yb) | 0.1 | 1 |

The main technical characteristics of the electrocatalytic pyrolysis plant for processing carbonaceous feedstock and producing pyrolysis synthesis gas and the solid carbon residue - pyrocarbon are given in Table 6.

**Table 6**

| Name of parameters | | Unit of measurement | Value |
|---|---|---|---|
| Productivity of processing of biological silt | | kg/h | 50-5000 |
| Operating mode | | hour | 8,16,24 |
| Established power of current collectors | | kw | 40-300 |
| Average power consumption, no more than | | kw | 20-200 |
| Output product in percentage relation to total quantity of waste: | | | |
| | a synthesis gas, provisional | % | 70 |
| | a solid carbon residue, provisional | % | 30 |
| Parameters of power supply of the equipment of plant: | | | |
| | Voltage | V | 380 |
| | Frequency | Hertz | 50 |
| Working range of temperature in the reactor | | °C | 600 - 800 |
| Range of indoors temperature with the reactor installed | | °C | 0-(+)40 |
| Speed of rotation of the agitator at various technological modes | | Turnovers/min | 20-55 |
| Horizontal slope angle of the plant to the floor at various technological modes | | degree | 1-5 |
| Pressure inside the reactor, no more | | Atm (kg/sm²) | 0.3 |

Owing to adding effective in their work drive agitator 12 of a shovel type with the inclined blades 14 arranged on the shaft 13 in a spiral fashion, the charging device 8 (alternative embodiments 1, 2) and the discharging device 18 (alternative embodiments 3, 4) to the structure of the suggested electrocatalytic pyrolysis plant for processing carbonaceous feedstock and producing pyrolysis synthesis gas and the solid carbon residue - pyrocarbon and also due the effective configuration of the electric heaters 5 in the form of sections 19 of a stator winding and expansion of the area of application of more effective catalyst 11, processes of agitating and thermal decomposition of the feedstock in the reactor 1 are intensified that accelerates the process of pyrolysis and increases the quantity of the carbon transforming from a solid modular state to gaseous state.

As the result, the power consumption by the disclosed pyrolysis plant is reduced and the yield of the pyrolysis synthesis gas is increased.

### INDUSTRIAL APPLICATION OF THE INVENTION

The given data confirm feasibility of the industrial application of the applied for the invention electrocatalytic pyrolysis plant for processing carbonaceous feedstock and producing pyrolysis synthesis gas and the solid carbon residue - pyrocarbon that may be widely used in the process of microbiological reclaiming of sewage runoff and industrial sewage waters.

### List of designations:

1. reactor
2. cylindrical body of the reactor
3. heat insulating layer of the reactor
4. shell of the reactor
5. electric heater
6. hopper for feedstock
7. feed chamber
8. charging device of the feed chamber
9. pyrocarbon discharge chamber
10. pyrolysis synthesis gas outlet pipe
11. catalyst comprising a powdered mixture of metals, including nickel (Ni), cadmium (Cd) and molybdenum (Mo)
12. agitator
13. shaft of the agitator
14 inclined blades arranged on the shaft in a spiral fashion
15. drive of the agitator
16 horizontal inlet channel of the feed chamber
17 horizontal outlet channel of the feedstock discharge chamber
18. discharging device of the pyrocarbon discharge chamber
19 section of the electric heaters
20. piston mechanism of the charging device
21. crank-rocker drive of the piston mechanism of the charging device
22. auger of the charging device
23. electric drive of the auger mechanism of the charging device
24. piston mechanism of the discharging device
25. crank-rocker drive of the piston mechanism of the discharging device
26. auger mechanism of the discharging device
27. electric drive of the auger mechanism of the discharging device
28. motor - reducer
29. muff

## Claims

1. Electrocatalytic pyrolysis plant for processing carbon feedstock by pyrolysis and producing pyrolysis synthesis gas and the solid carbon residue - pyrocarbon, comprising a reactor (1) in the form of a horizontal cylindrical body (2) with a heat insulating layer (3) and a shell (4), electric heaters (5) situated around the periphery of the body (2) of the reactor (1), a hopper (6) for feedstock, a feed chamber (7) situated in the upper inlet section of the reactor (1) provided with a charging device (8), a pyrocarbon discharge chamber (9) situated in the lower outlet section of the reactor (1) opposite to its inlet part, pyrolysis synthesis gas outlet pipe (10) situated in the upper section of the reactor (1), and a catalyst (11) applied to the details inside of the reactor (1), wherein the reactor (1) is stationary, an agitator (12) is mounted horizontally in the body (2) of the reactor (1) with possibility of rotation, said agitator being in the form of a shaft (13) with inclined blades (14) arranged thereon in a spiral fashion and being provided with a drive (15) situated outside of the reactor (1) and kinematically connected with the shaft (13) of the agitator (12), the feed chamber (7) is arranged with the horizontal inlet channel (16) arranged across an axis of the reactor (1) inside which (16) the charging device (8) is situated, a pyrocarbon discharge chamber (9) in the lower section is with horizontal outlet channel (17) arranged across the axis of the reactor (1), inside of which (17) the discharging device (18) is arranged, the electric heaters (5) are in the form of a stator winding comprising three electric heaters (5) sections (19), which are situated outside the body (2) of the reactor (1) with an angle α = 120° therebetween and which can be connected to a 3-phase or 2-phase AC electric circuit, and the catalyst (11) is applied to the inclined blades (14) of the agitator (12) and to the inside surface of the body (2) of the reactor (1), being in contact to the feedstock while its agitating by the inclined blades (14) of the shaft (13) of the agitator (12), and the catalyst (11) is in the form of a sprayed metallic composition comprising a powdered mixture of metals including nickel (Ni), cadmium (Cd) and molybdenum (Mo).

2. The plant according to Claim 1, wherein the catalyst (11) is the sprayed metallic composition comprising the powdered mixture of metals including nickel (Ni) - 55 - 65 %, preferably 60 %, cadmium (Cd) - 15 - 25 %, preferably 20 %, and molybdenum (Mo) - the rest.

3. The plant according to Claim 1, wherein the charging device (8) is in the form of a piston mechanism (20) provided with a crank-rocker drive (21).

4. The plant according to Claim 1, wherein the charging device (8) is in the form of an auger mechanism (22) provided with an electric drive (23).

5. The plant according to Claim 1, wherein the discharging device (18) is in the form of a piston mechanism (24) provided with a crank-rocker drive (25).

6. The plant according to Claim 1, wherein the discharging device (18) is in the form of an auger mechanism (26) provided with an electric drive (27).

7. The plant according to Claim 1, wherein the drive (15) of the agitator (12) is in the form of a motor - reducer (28), that is kinematically connected with the shaft (13) of the agitator (12) by means of a muff (29).

8. The plant according to Claim 1, wherein the catalyst (11) is applied to the lower section of the inside surface of the body (2) of the reactor (1) on height of a segment h equal to 0.25 - 0.50 of its diameter D.
